# EUROPEAN PATENT APPLICATION

(11) **EP 1 235 396 A1**
(43) Date of publication of application: **28.08.2002**
(21) Application number: 01970185.3
(22) Date of filing: 21.09.2001
(51) Int. Cl.: H04L 12/58, G06F 13/00, G06F 17/30, G06F 17/60

(54) **SYSTEM AND METHOD FOR USING E-MAIL AS ADVERTISEMENT MEDIUM**

(30) Priority: 26.09.2000 JP 2000292163
(71) Applicant: Interlex Inc., Tokyo 108-0023 (JP)
(72) Inventor: SATO, Kenji, Shinagawa-ku, Tokyo 141-0021 (JP)
(74) Representative: Hoffmann, Eckart, Dipl.-Ing.
(86) International application number: JP0108236
(87) International publication number: WO02028038

(57) **Abstract**

It is an object of the present invention to use electronic mail as an advertising medium so as to provide a user with an advertisement having a large information-communicating effect. A mail server 40 stores various advertising information items received from various advertisers, as well as distribution dates and/or times and/or recipient user attributes (region of residence, age, sex, etc.) and other such distribution conditions established by respective advertisers for respective advertising information items. When electronic mail is to be sent to a user 20 associated with mail server 40, such server 40 selects an advertising information item or items for which the current date and/or time, attribute or attributes of user 20, and/or the like match the previously established distribution condition or conditions, and affixes such advertising information item or items to a user-defined header of electronic mail which is sent to recipient user 20. Specially designed mail software 21 is present at a computer associated with-recipient user 20, such specially designed mail software 21 extracting advertising information item or items from such user-defined header of received electronic mail and displaying same at a mail body or within a progress display window during downloading of mail.

## Description

### FIELD OF ART

The present invention pertains to art for using electronic mail as an advertising medium through affixing of advertising information to electronic mail.

### BACKGROUND OF ART

Accompanying popularization of the Internet there is an increase in the number of companies offering free mail services through which electronic mail is distributed at no charge. Conventional free mail services may be categorized into two types. In the first type, represented by Hotmail™ of Microsoft Corporation of the U.S., banner ads are pasted into a region at the top, bottom, left, right, or the like of the body of Web-based electronic mail. In the second type, while sending and receiving of electronic mail in standard SMTP-POP format using ordinary mail software is permitted, a user may expect to receive any number of questionnaires, direct mail (DM) solicitations, and the like in any given day.

Moreover, while some variation exists depending upon electronic mail server administration and mail software, sending and receiving of electronic mail currently occurs through a process such as the following. The following description is carried out in terms of a mail sender A, a mail recipient B, a mail server X to which mail sender A connects, and a mail server Y to which mail recipient B connects.

### <1> Sending of Mail by Sender A

Sender A uses mail software or the like to create electronic mail, and connects to network to send same.

### <2> Transfer to Sender Mail Server X

Electronic mail sent by sender A is transferred to sender mail server X.

### <3> Transfer to Recipient Mail Server Y

Using SMTP or the like, sender mail server X looks at recipient mail address and transfers electronic mail arriving at sender mail server X to recipient mail server Y.

### <4> Routing within Recipient Mail Server Y

Recipient mail server Y looks at recipient mail address of electronic mail transferred to recipient mail server Y and routes same to host for recipient B.

### <5> Reception of Mail by Recipient B

Using POP or the like, recipient B connects to network and receives mail addressed to recipient B stored at host for recipient B on recipient mail server Y.

Now, a wide variety of advertising media are known conventionally, electronic mail being one such medium, as mentioned above. Whatever the advertising medium -- electronic mail included -- the standard conventional ways of securing advertisements have involved methods which achieve their effect through reliance on salespersons, such as when a salesperson from an advertising company conducts a survey, asking advertisers their preferences with regard to preferred conditions, presents conditions for placement of an advertisement to an advertiser, and accepts an order for placement of an advertisement from an advertiser. Furthermore, the standard conventional ways in which advertisers have determined advertising effectiveness (e.g., advertisement view rate) have been limited to methods involving looking at performance in terms of actual customer acquisition or the like or looking at results of surveys performed by viewership rating research firms and so forth.

Of the previously mentioned two types of conventional Internet ads, in the former, or banner, type, while some variation is observed depending on the design of the banner employed, the information-communicating effect of the banner itself as an advertisement is not ordinarily very great. Furthermore, in the latter type, in which questionnaires and direct mail solicitations are sent, there is the problem that since the user is liable to associate these with pressure tactics and since there is a strongly coercive component to the annoying questionnaires, the user may well not be motivated to examine their content in detail.

Furthermore, with respect to the advertising sales methods that rely on the efforts of salespersons, these are lacking in consistency, it being for example possible for differences to arise from salesperson to salesperson with respect to the conditions for placement of an ad and in the cost estimates which are provided to potential customers. As a result, the advertiser faces the distasteful prospect of not being able to place an advertisement at conditions agreeable to the advertiser. Moreover, accurate measurement and analysis of advertising effectiveness has been difficult to achieve through conventional methods of determining advertising effectiveness.

### DISCLOSURE OF INVENTION

It is an object of the present invention to use electronic mail as an advertising medium so as to provide a user with an advertisement having a large information-communicating effect.

It is another object of the present invention to use electronic mail as an advertising medium so as to make it possible for an advertisement to be placed at conditions (e.g., targeted audience to which advertisement is to be sent, date or dates or time or times of day when advertising is to be carried out, advertisement cost, etc.) agreeable to an advertiser.

It is still another object of the present invention to use electronic mail as an advertising medium so as to permit accurate measurement of advertising effectiveness.

A system in accordance with a first aspect of the present invention is provided with a mail server that possesses one or more advertising information items and advertisement distribution condition or conditions established for respective advertising information item or items, and that when electronic mail is to be sent to a user computer system used by a user recipient selects an advertising information item or items satisfying such advertisement distribution condition or conditions and affixes such selected advertising information item or items to such electronic mail which is sent to such user computer system, and mail software that is capable of being executed by such user computer system and that during or after receipt of such electronic mail displays such advertising information item or items which is or are affixed to such electronic mail which is received from such mail server.

In accordance with such a system, advertisement distribution condition or conditions (e.g., distribution date or dates and/or time or times, attribute or attributes of user recipient or recipients to be targeted for distribution, etc.) are previously established for respective advertising information item or items, advertising information item or items is or are selected based on such advertisement distribution condition or conditions and is or are affixed to electronic mail, distributed to such user recipient or recipients, and displayed at user computer or computers. Because respective advertising information item or items can be sent at appropriate time or times to appropriate user or users as a result of appropriate establishment of advertisement distribution condition or conditions for respective advertising information item or items, the information-communicating effect of the advertisement on the user is increased. Furthermore, where such advertising information item or items is or are displayed during receipt of electronic mail, because during receipt of electronic mail it is common for a user to be looking at the screen while awaiting completion of receipt thereof, utilization of such time for advertising is permitted, heightening advertisement information-communicating effect.

A system in accordance with a second aspect of the present invention is provided with an advertisement placement request server that presents an advertisement placement condition or conditions including advertising fee or fees to a computer system of an advertisement provider and that accepts from such advertisement provider computer system an advertisement placement request or requests as well as advertisement distribution condition or conditions for such advertisement or advertisements which is or are the subject or subjects of such request or requests, and a mail server that possesses one or more advertising information items as well as such advertisement distribution condition or conditions accepted by such advertisement placement request server for such advertising information item or items and that when electronic mail is to be sent to a user computer system used by a user recipient selects an advertising information item or items satisfying such advertisement distribution condition or conditions and affixes such selected advertising information item or items to such electronic mail which is sent to such user computer system.

In accordance with such a system, an advertisement provider (e.g., an advertiser, advertising agency, or the like) using such system can ascertain, by way of a network or networks, condition or conditions such as advertising fee or fees for placement of an advertisement or advertisements. Furthermore, in accordance with such a system, an advertisement provider can itself establish, by way of a network or networks, advertisement distribution condition or conditions, with advertisement or advertisements meeting such established advertisement distribution condition or conditions being distributed to electronic mail recipient or recipients.

A system in accordance with a third aspect of the present invention is provided with a mail server that possesses one or more advertising information items as well as advertisement distribution condition or conditions for such advertising information item or items, and that when electronic mail is to be sent to a user computer system used by a user recipient selects an advertising information item or items satisfying such advertisement distribution condition or conditions and affixes such selected advertising information item or items to such electronic mail which is sent to such user computer system, and a report server that possesses a history concerning affixing of such advertising information item or items to such electronic mail and sending of same to such user computer system and that uses such history to report advertising results for such advertising information item or items to, or to carry out processing with respect to advertising charges in connection with such advertising information item or items for, such advertisement provider providing such advertising information item or items.

In accordance with such a system, an advertisement provider can, by way of a network or networks, obtain a report or reports on the results of advertising (e.g., number of users receiving such advertising information item or items, attributes of such user or users, and so forth) or obtain processing wherein advertising charges are calculated and charges are assessed, for example.

A preferred embodiment is furthermore such that, when such electronic mail is sent to such recipient user computer system, such mail server by virtue of mail software used by such user recipient and designed specially for such system identifies a mail software provider or providers which provided such user recipient with mail software. In addition, a reporting server carries out reporting of results of advertising or calculation of advertising charges or the like for each provider providing such specially designed mail software. This allows such provider or providers providing such specially designed mail software (e.g., various advertising firms, publishing companies inserting such mail software in magazines and distributing same, etc.) to learn about the behaviors of their various customers or to have processing performed in connection with charges for use of such system and so forth.

A system in accordance with a fourth aspect of the present invention is provided with a mail server that possesses one or more advertising information items and that, when electronic mail is to be sent to a user computer system used by a user recipient, affixes such advertising information item or items to such electronic mail which is sent to such user computer system, such electronic mail having a mail header and a message body which is sent after such mail header and such mail server being such as to allow such advertising information item or items to be affixed to such mail header of such electronic mail, and mail software that is capable of being executed by such user computer system, that receives such electronic mail from such mail server, and that displays such advertising information item or items affixed to such mail header of such received electronic mail during receipt of such message body of such electronic mail.

A system in accordance with a fifth aspect of the present invention is provided with a mail server that possesses one or more advertising information items and that, when electronic mail is to be sent to a user computer system used by a user recipient, affixes such advertising information item or items to such electronic mail which is sent to such user computer system, a stream server for sending advertisement streaming data to such user computer system, and mail software that is capable of being executed by such user computer system, that receives such electronic mail from such mail server, and that displays such advertising information item or items affixed to such received electronic mail. Furthermore, such advertising information item or items affixed to such electronic mail may be capable of comprising an address or addresses for such streaming data. In the event that such received advertising information item or items comprises or comprise such address or addresses for such streaming data, such mail software uses such address or addresses to receive such streaming data from such stream server and displays such received streaming data.

A system in accordance with a sixth aspect of the present invention is provided with a mail server that possesses one or more advertising information items and that, when electronic mail is to be sent to a user computer system used by a user recipient, affixes such advertising information item or items to such electronic mail which is sent to such user computer system, and an external device in the possession of such user recipient and capable of being mounted in and removed from such user computer system. Stored within such external device is mail software. Such mail software is made capable of being executed by such user computer system when such external device is mounted in such user computer system, receives such electronic mail from such mail server, and displays such advertising information item or items affixed to such received electronic mail.

A server system in accordance with a seventh aspect of the present invention is provided with a mail server that possesses one or more advertising information items and that, when electronic mail is to be sent to a user computer system used by a user recipient, affixes such advertising information item or items to such electronic mail which is sent to such user computer system, and a recipient user award server that stores award point or points accrued to such user recipient, that updates such award point or points for such user recipient when such advertising information item or items is or are affixed to such electronic mail which is sent to such user computer system, and that awards such user recipient a stake in a drawing for a prize based on such award point or points.

In accordance with such a server system, because award points increase with increasing frequency of use of electronic mail, utilization of electronic mail can be encouraged, improving the effectiveness of advertising. Since not a gift but only a stake in a drawing is conferred at low cost based on award points, by at such server system investigating such history of electronic mail sent and/or received by such user prior to conferring such drawing stake it is possible to prescreen for users who may have sent themselves large volumes of electronic mail or engaged in other such fraudulent conduct. By controlling accruing of award points and/or controlling determination of whether such a drawing stake or stakes is or are to be awarded, it is possible to prevent conferring of drawing stake or stakes to user or users who may have engaged in such fraudulent conduct.

### BRIEF DESCRIPTION OF DRAWINGS

FIG. 1 is a block diagram showing the constitution of an electronic mail system associated with an embodiment of the present invention;
FIG. 2 is a drawing showing an example in which a text string advertisement is displayed within a download status confirmation window;
FIG. 3 is a drawing showing an example in which a text string advertisement is displayed beneath a mail body;
FIG. 4 is a drawing showing an example in which a movie advertisement is displayed within a window separate from a download status confirmation window;
FIG. 5 is the top portion of a flowchart showing processing for distribution of electronic mail in the system at FIG. 1;
FIG. 6 is the middle portion of the aforementioned flowchart;
FIG. 7 is the bottom portion of the aforementioned flowchart;
FIG. 8 is a block diagram showing the constitution of a database used by a mail server 40;
FIG. 9 is a block diagram showing an example of a basic format for electronic mail;
FIG. 10 is a block diagram showing reception by specially designed mail software 21 of a streaming data advertisement from a stream server;
FIG. 11 is a block diagram showing a constitution for registering personal information, a distribution schedule or schedules, an advertising information item or items, and/or other such data in the database shown in FIG. 8;
FIG. 12 is a drawing showing an example of a user registration form 210;
FIG. 13 is a drawing showing an example of an advertisement placement request table;
FIG. 14 is a drawing showing an example of an advertisement view rate table;
FIG. 15 is a block diagram showing the constitution of an external device storing specially designed mail software;
FIG. 16 is a block diagram showing an external device which is capable of being mounted in and removed from a computer system;
FIG. 17 is the top half of a flowchart showing a sequence of operations occurring when specially designed mail software stored in an external device is executed; and
FIG. 18 is the bottom half of the aforementioned flowchart.

### BEST MODE FOR CARRYING OUT INVENTION

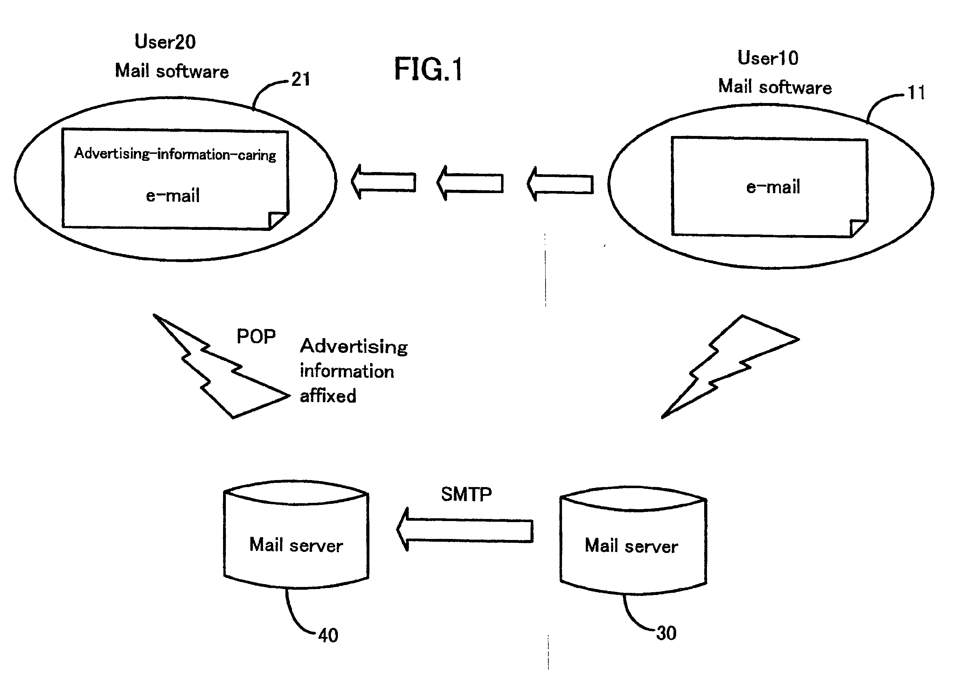

FIG. 1 shows the overall constitution of an advertisement-carrying electronic mail distribution system associated with an embodiment of the present invention.

At such system, a mail server affixes advertising information to electronic mail bound for various users and distributes such electronic mail to those users. By obtaining advertising fees from advertisers, a company operating such a mail server can offer electronic mail distribution services to users free of charge. For purposes of the present embodiment, it is necessary that at least the software used for receipt of electronic mail (mail software) by a user receiving such free mail service be software which accommodates those functionalities required by the present embodiment. Such software may be installed on the user's computer system from a CD-ROM or other such fixed recording medium or media, or may be downloaded by way of a network or networks. Alternatively or in addition thereto, such electronic mail software may be stored in an external device capable of being mounted in and removed from such user computer system, e.g., a portable USB device containing a memory or memories, with execution by such computer system of such electronic mail software within such external device being made possible as a result of connection of such external device to such computer system.

Referring to FIG. 1, a computer system of a user 10 possesses mail software 11, while a computer system of another user 20 possesses mail software 21. Furthermore, let us assume that user 10 connects to mail server 30, while user 20 connects to mail server 40. In addition, let us assume that mail server 40 associated with user 20 possesses functionality for affixing advertising information to electronic mail in accordance with the present invention. For user 20 to take advantage of such functionality, mail software 21 associated with user 20 is software specially designed to possess specifications in accordance with the principles of the present invention.

Taking now the example of the case where user 10 sends electronic mail addressed to user 20, the functions and operation of the various components will be described below.

The process by which electronic mail is distributed from user 10 to user 20 in such a case is similar in principle to the conventional process already described in the section on conventional art. However, in addition to such conventional process, mail server 40 associated with user 20 adds advertising information comprising, for example, a text string or strings created by referring to a database, described below, to a user-defined header of electronic mail addressed to user 20 which is received from mail server 30 associated with user 10. What is here referred to as a "user-defined header" is a region provided in the header portion of electronic mail which is approved for rewriting by the user. For example, the format defined by RFC822, which currently serves as the basis for the format of electronic mail, provides for a region called a "user-defined header" within the mail header which writers of mail software and the like are free to define as they like.

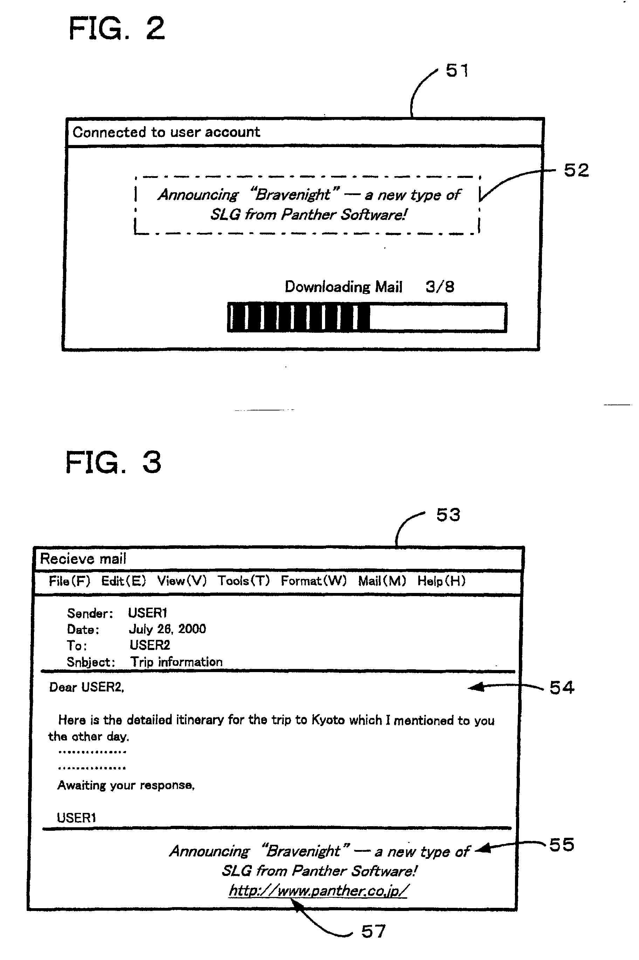

When electronic mail is received from mail server 40, specially designed mail software 21 of user 20 extracts advertising information from the user-defined header of that received mail and displays a text string serving as such advertising information, for example as shown in FIG. 2 displaying a text string 52 serving as such advertising information within a download status confirmation window 51 indicating download progress during operations for receipt of electronic mail, or for example as shown in FIG. 3 displaying a text string 55 (in this example also containing a clickable URL 57 for accessing more detailed information) serving as such advertising information at a prescribed location (e.g., below body portion 54) within a window 53 for display of that electronic mail when the body of that electronic mail is opened following completion of receipt of mail, or the like.

The process of actual distribution of mail is in other respects no different from the standard conventional process described above.

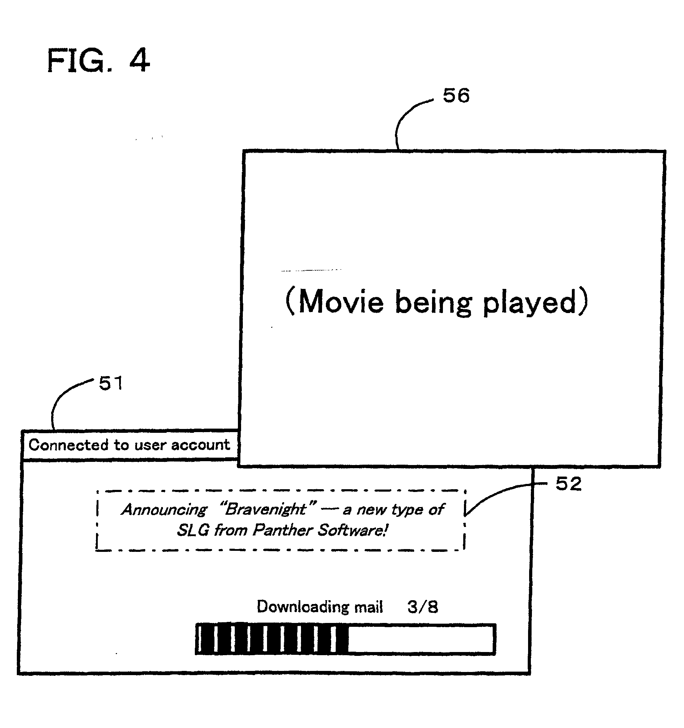

The advertising information which may be affixed to the electronic mail is not limited to text strings, but may be any of a wide variety of types of data, including audio, still video, motion video, movie, or any combination thereof or the like. For example as shown in FIG. 4, where a text string and a movie have been added as advertising information to the user-defined header of electronic mail which is then received, specially designed mail software 21 may display that text string 52 within download status confirmation window 51 during operations for receipt of that electronic mail, and a movie player window 56 may be made to pop up, with that movie being played and displayed therein. The time interval during which advertising information is displayed need not necessarily coincide with the time interval during which download status confirmation window 51 is displayed. Advertising information may also continue to be displayed even after all mail has been received and download status confirmation window 51 is no longer present.

Furthermore, in accordance with the principles of the present invention, mail server 40 and/or specially designed mail software 21 may be constituted so as to allow advertising information to be presented to user 20 not only when user 20 receives mail as described above, but even when electronic mail is only being sent. Such constitution may for example be as follows. That is, specially designed mail software 21 may be constituted so as to automatically perform operations for connecting to a POP (download) server representing mail server 40 prior to connecting to an SMTP (upload) server, even when mail is only being sent. Furthermore, when specially designed mail software 21 connects to such POP server, even where there is not even a single mail message addressed to user 20 from another sender, mail server 40 may be constituted to itself automatically generate and send to mail software 21 mail (having an empty message body) addressed to user 20 to which advertising information is affixed.

An example of the overall process of advertising activities in the present embodiment for using electronic mail as advertising medium, in which example the foregoing variant process or processes might be inserted within the previously described standard conventional process for distribution of electronic mail, is described below.

That is, an advertising firm obtains from an ISP (Internet service provider) or other such vendor which operates mail server 40 having advertisement distribution functionality a right to distribute specially designed mail software 21 having specifications in accordance with the principles of the present invention to an arbitrary user or users either for a fee or at no charge. Furthermore, such advertising firm may also serve as advertising agency for carrying out activities in connection with receipt of advertising orders placed for advertisements where electronic mail serves as advertising medium, which is carried out by mail server 40.

User 20 receives such specially designed mail software 21 from such advertising firm at no charge. User 20 enters into a contractual arrangement with such ISP operating mail server 40, which offers mail service in accordance with the principles of the present invention, to receive such mail service either for a fee or at no charge. Such advertising firm obtains an advertisement from an advertiser, and places an order to run the ad with such ISP operating mail server 40.

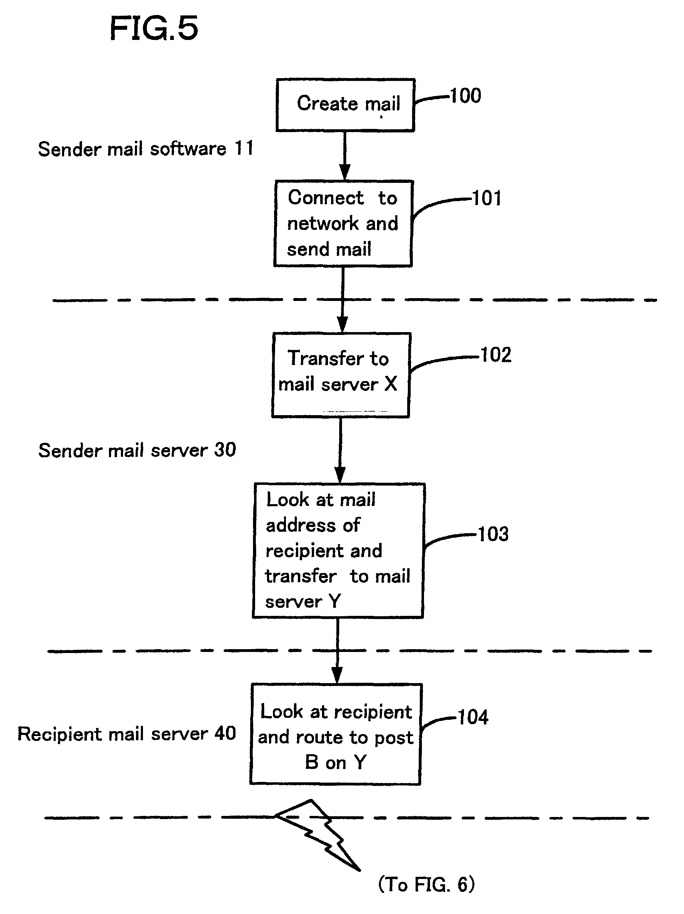

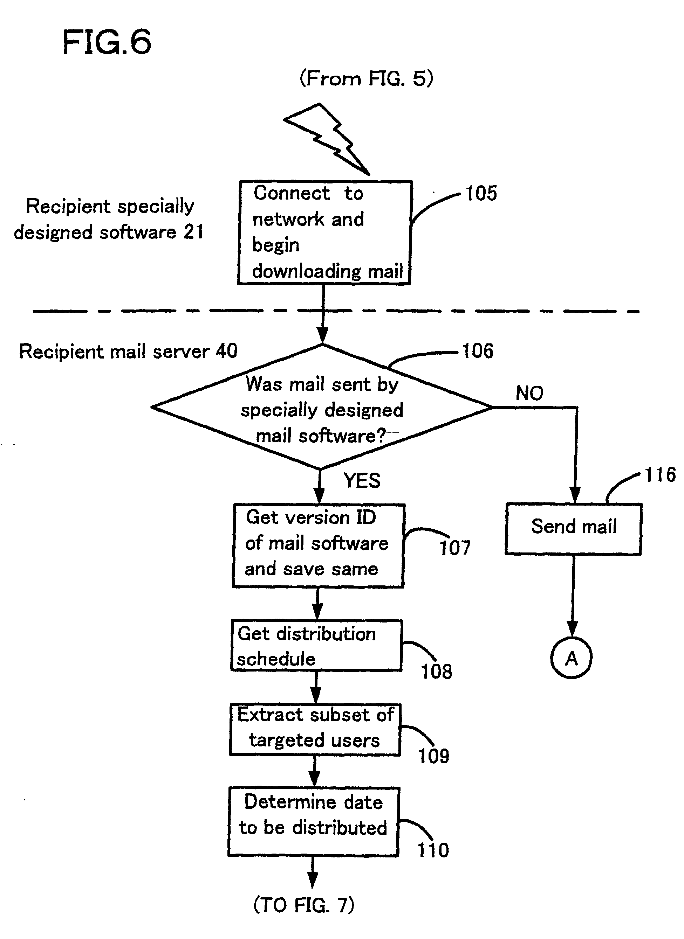

Let us assume that a user 10 sends electronic mail addressed to user 20. The process by which that electronic mail is sent and received is as indicated in FIGS. 5 through 7.

### (1) Sending of Mail by User 10 (Steps 100 and 101 at FIG. 5)

User 10 uses his or her mail software 11 (which need not have specifications in accordance with the principles of the present invention) or the like to create electronic mail addressed to user 20, this electronic mail being sent from mail software 11 as a result of connection to a network.

### (2) Transfer to Mail Server 30 (Step 102 at FIG. 5)

Electronic mail sent by user 10 is transferred to mail server 30 (which need not have specifications in accordance with the principles of the present invention) associated with user 10.

### (3) Transfer to Recipient Mail Server 40 (Step 103 at FIG. 5)

Using SMTP or the like, sender mail server 30 looks up the recipient mail address and transfers electronic mail arriving at sender mail server 30 to recipient mail server 40.

### (4) Routing at Recipient Mail Server 40 (Step 104 at FIG. 5)

Recipient mail server 40 (having specifications in accordance with the principles of the present invention) looks at the recipient mail address of the electronic mail transferred to recipient mail server 40 and routes same to a host for user 20.

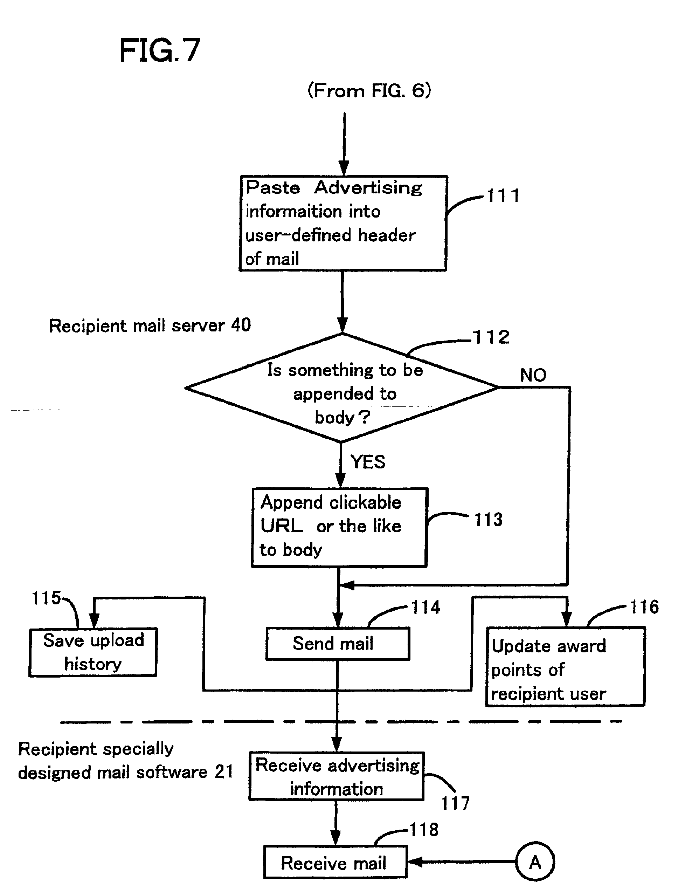

### (5) Initiation of Download of Mail by User 20 (Step 105 at FIG. 6)

User 20 uses specially designed mail software 21 having specifications in accordance with the principles of the present invention to connect to a network and initiate the process for downloading electronic mail addressed to user 20 and stored at recipient mail server 40.

### (6) Storage of Usage Environment of Specially Designed Mail Software 21 (Steps 106 and 107 at FIG. 6)

Upon receipt of a mail download request from user 20 (i.e., upon connection by user 20 to POP server), recipient mail server 40, in the event that the mail download request originated from specially designed mail software 21 having specifications in accordance with the principles of the present invention ("Yes" at step 106), determines a version ID of that specially designed mail software 21 and stores system usage information separately for each such version ID (step 107). Here, the "version ID" of the specially designed mail software 21 is an identifier unique to each of any number of advertising firm or firms distributing such specially designed mail software 21 to user or users, this version ID being affixed to such specially designed mail software 21 and being communicated from such specially designed mail software 21 to mail server 40 when specially designed mail software 21 accesses mail server 40. Recipient mail server 40 is able to identify which advertising firm distributed that specially designed mail software 21 from that version ID.

Moreover, in the event that the mail download request originated from mail software not having specifications in accordance with the principles of the present invention ("No" at step 106), recipient mail server 40 sends electronic mail addressed to user 20 to user 20 in the same manner as is done conventionally (step 116).

### (7) Database Access (Steps 108 through 110 at FIG. 6)

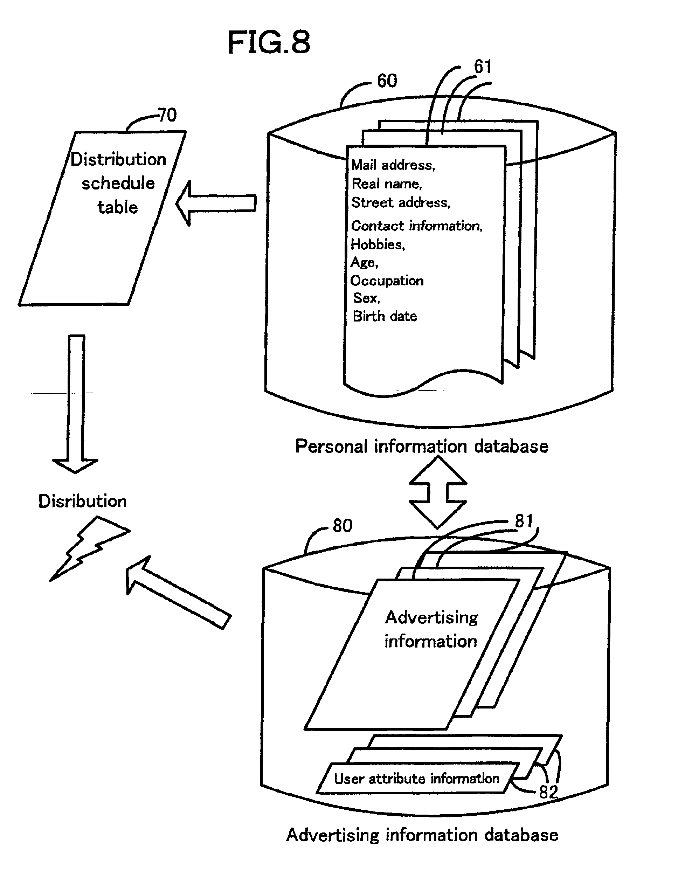

Recipient mail server 40 accesses a database which has previously been created on such server 40. As shown in FIG. 8, this database contains a personal information database 60 storing -- separately for each of a plurality of users contracting to receive advertisement-information-carrying mail service from that mail server 40 -- the user's mail address, name, street address, sex, age, occupation, and other such personal information (user attributes) 61, 61, ... ; an advertising information database 80 storing a variety of advertising information items 81, 81, ... for distribution by affixal to electronic mail addressed to such user or users, user attribute information 82, 82, ... for selection of user or users to receive distribution of various advertising information items 81, 81, ..., and so forth; and a distribution schedule 70 listing a schedule or schedules of distribution date or dates and/or time or times of day when distribution of various advertising information items 81, 81, ... should be carried out.

### (8) Extraction of Data from (Steps 108 through 110 at FIG. 6)

Recipient mail server 40 refers to distribution schedule 70 within the database shown in FIG. 8 to determine which advertising information item or items should be distributed, given the current date and time (step 108). Recipient mail server 40 then refers to user attribute information 82 for such advertising information 81 within advertising information database 80 which is currently targeted for distribution, acquires recipient user attribute or attributes listed within such user attribute information 82, and thereafter checks for a match between such acquired recipient user attribute or attributes and personal information 61, 61, ... for the plurality of users within personal information database 60 to extract a subset of user or users (targeted users) who should receive distribution of that advertising information 81 targeted-for distribution (step 109). Recipient mail server 40 then uses the information represented by the extracted subset of targeted users to select advertising information 81 to be distributed to a user 20 issuing a mail download request (step 110). Note that while processing as described at the foregoing steps 108 and 109 may occur at the time or times of receipt of each mail download request from a user, such processing may alternatively be carried out prior thereto (e.g., according to a regular schedule such as once per day), determining in advance which advertising information should be distributed on which days and/or at what times, and/or the identities of the users targeted for respective advertising information item or items.

### (9) Pasting of Advertising Information into Mail (Steps 111 through 113 at FIG. 7)

Recipient mail server 40 pastes advertising information 81 to be presented to user 20 into the user-defined header portion of electronic mail addressed to user 20 (step 111). While advertising information 81 may for example be a text string having publicity-type content, such advertising information 81 is not limited to simple text strings but may be video, audio, movie, or other such data, or composite data comprising same, and may contain clickable URL or URLs, banner ad or ads, and so forth. Furthermore, recipient mail server 40 may if necessary add to the electronic mail body a banner ad or a clickable URL for browsing a website of the advertiser, or the like, for example (steps 112 and 113).

### (10) Sending of Mail (Step 114 at FIG. 7)

Recipient mail server 40 sends user 20 electronic mail to which advertising information is affixed.

### (11) Compilation of Upload History Database (Step 115 at FIG. 7)

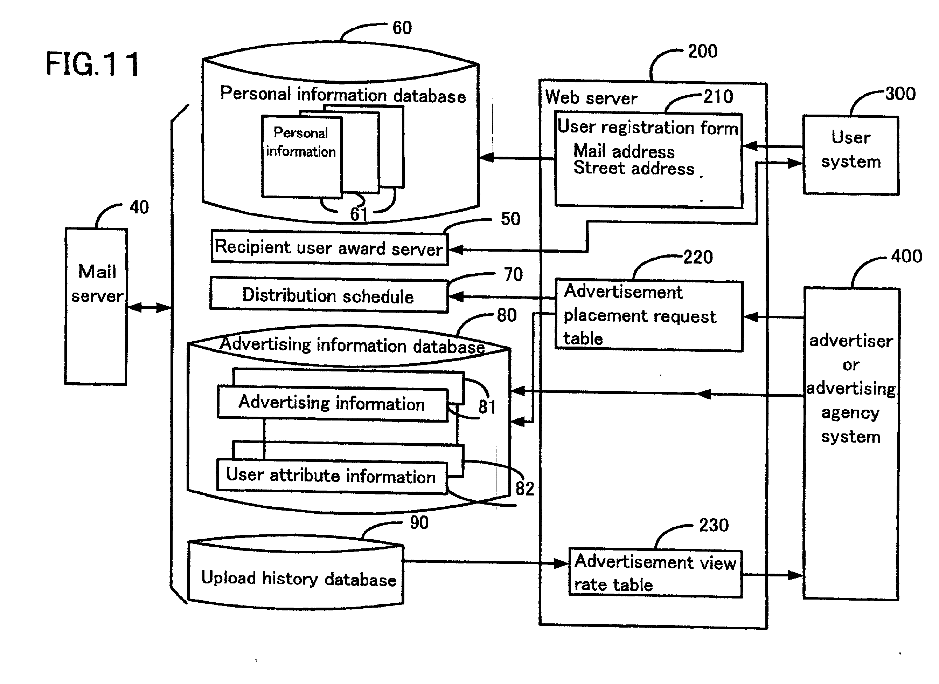

Recipient mail server 40 compiles a database (upload history database 90 described below with reference to FIG. 11) wherein are stored upload histories recording distribution dates and times for sent advertisement-information-carrying electronic mails, information identifying recipient users 20, information identifying affixed advertising information, version IDs (i.e., advertising firms) of specially designed mail software 21 identified at step 107, and so forth. Such an upload history database may be used for reporting of advertisement view rates to advertisers or advertising agencies.

### (12) Update of Recipient User Award Points (Step 116 at FIG. 7)

Management of award points respectively accruing to the plurality of users making use of recipient mail server 40 may be carried out at recipient user award server 50, to be described below with respect to FIG. 11. Recipient award server 50 is constituted so as to carry out determination of whether to award each user a stake in a drawing for a prize based on the point or points for that user. When advertisement-information-carrying electronic mail is sent to user 20, recipient mail server 40 updates the award points for recipient user 20 managed at recipient user award server 50 by adding a prescribed amount thereto at step 116. Accordingly, the number of award points for a user 20 increases as the number of advertisement-information-carrying electronic mail messages received by that user 20 increases. A user 20 is eligible to receive the aforementioned stake in a drawing for a prize if the number of his or her award points meets or exceeds some prescribed threshold value. A user 20 receiving such a drawing stake may for example employ a computer system used by him or her to participate in such drawing online. A user 20 winning such a drawing receives a prescribed prize.

### (13) Reception of Mail and Advertisement Information (Steps 117 and 118 at FIG. 7)

Specially designed mail software 21 of user 20 receives advertisement-information-carrying electronic mail from recipient mail server 40. Specially designed mail software 21 receives advertising information affixed to the user-defined header before the body of the electronic mail message, any attachments thereto, or the like (step 117). Specially designed mail software 21 is therefore able, while receipt of the entire electronic mail post or posts is still not yet complete, to display such advertising information within a download status confirmation window 51 as shown for example in FIG. 2 (or, where there is mail to be sent, within an upload status confirmation window), or in a separate window 56 which is open at the same time as download status confirmation window 51 as shown for example in FIG. 4, or in another such location or fashion. Furthermore, following completion of receipt of the entire electronic mail post or posts (step 118), specially designed mail software 21 may as shown for example in FIG. 3 display advertising information 55 in window 53 for display of mail body 54, or, where a network address or addresses of a clickable URL or URLs and/or banner ad or ads or the like has or have been added thereto as described above with reference to step 113, may in addition display such clickable URL or URLs and/or banner ad or ads or the like within window 53 together with mail body 54.

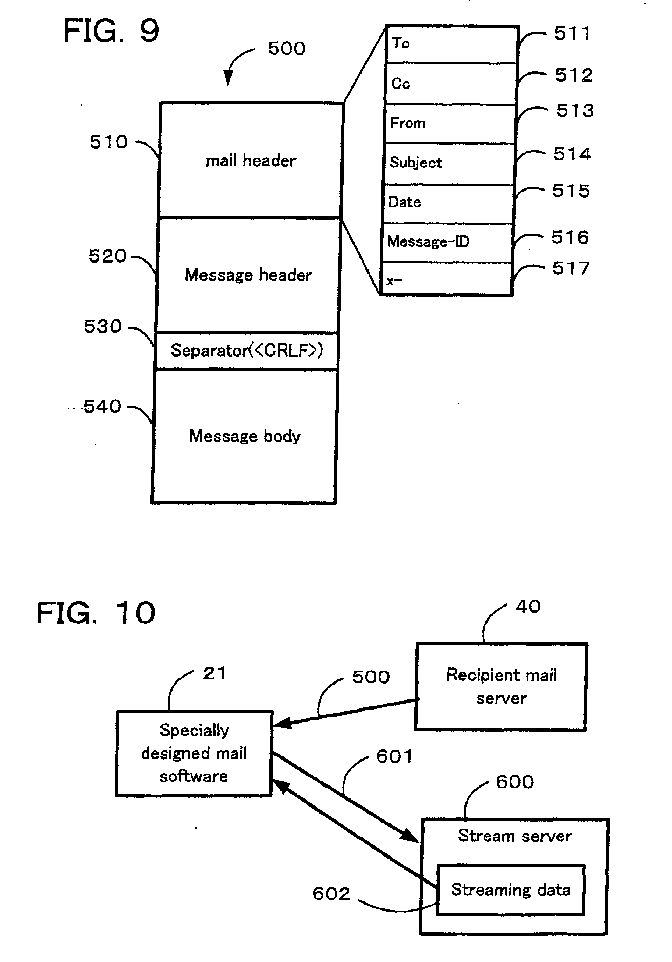

FIG. 9 shows an example of a basic format for electronic mail. This example follows RFC822, well known as a standard format for electronic mail.

Referring now to FIG. 9, an electronic mail post 500 comprises a plurality of parts, these including, in the order in which sent, a mail header 510, a message header 520, a separator 530, and a message body 540 containing the body of the electronic mail message. Message body 540 contains the body of the electronic mail message. Mail header 510, which is sent before the other part or parts, may comprise a primary recipient field 511 which is introduced by the prefix "To", a secondary recipient field 512 which is introduced by the prefix "Cc", a mail sender field 513 which is introduced by the prefix "From", a subject field 514 which is introduced by the prefix "Subject", a sent date and time field 515 which is introduced by the prefix "Date", a mail ID field 516 which is introduced by the prefix "Message-ID", a user-defined header field 517 which is introduced by the prefix "x-", and other such sections.

In the present embodiment, advertising information follows the prefix "x"' and is written into user-defined header field 517 within mail header 510. While there are a wide variety of formats in which such advertising information may be written therein, two such formats will be described below by way of example.

### (1) Example of Format for Telop-Type, Especially Text-String, Advertising Information

The identifying code "admmess : ", indicating a text string advertisement, may be written after the prefix "x-", with the text string representing advertising information being written thereafter. For example, the text string "Announcing 'Bravenight' -- a new type of SLG from Panther Software!" shown by way of example at FIG. 2 may be written into user-defined header field 517 as follows.
"x-admmess : Announcing 'Bravenight' -- a new type of SLG from Panther Software!"

When electronic mail 500 is received, specially designed mail software 21 reads the text string which follows "x-admmess : " in user-defined header field 517 of that received electronic mail, and displays that text string at a prescribed location on a display screen, such as within a download status confirmation window 51 as shown by way of example in FIG. 2.

### (2) Example of Format for Motion Video, Movie, or other such Streaming-Type Advertising Information

The identifying code "admstr : ", indicating a streaming-type advertisement, may be written after the prefix "x-", with an address or addresses for such streaming data (e.g., a URL or URLs of streaming data 602 which resides on a prescribed stream server 600 on a network, such as is shown in FIG. 10) being written thereafter. Such format may for example be written as follows.
"x-admstr : ftp : //202.238.95.24/∼∼/∼∼/filename"

Here, that which follows "admstr : " represents the address of such streaming data. "filename" represents the name of the file containing such streaming data.

When electronic mail 500 is received, specially designed mail software 21, as shown at FIG. 10, reads the address which follows "admstr : " in user-defined header field 517 of that received electronic mail, uses that address to issue a request (601) to a prescribed stream server 600 for the streaming data 602 in question, and plays the streaming data 602 received from that server 600, displaying same at a prescribed location on a display screen, such as at a window 56 as shown by way of example in FIG. 4.

Among the modes which may be employed by specially designed mail software 21 for display of advertisement information affixed to-received electronic mail, which modes include the two modes mentioned above, variations such as the following are for example possible.
<1> Advertising information pasted into a user-defined header may be displayed at an upload and/or download status confirmation window indicating progress of upload and/or download of mail by specially designed mail software 21.
<2> Advertising information may be displayed above, below, or at another such appropriate location or locations relative to a message area or areas (e.g., body area or areas) of mail received by specially designed mail software 21.
<3> Where specially designed mail software 21 has multiwindow capability permitting opening of multiple windows, specially designed mail software 21 may upon receipt of mail open a new area (new window) and display advertising information therein.
<4> Advertising information may be displayed within a special area within a main window of specially designed mail software 21.

As shown at FIG. 8, a database used by mail server 40 possesses a personal information database 60, a distribution schedule or schedules 70, and an advertising information database 80. FIG. 11 shows a constitution for registering personal information, a distribution schedule or schedules, an advertising information item or items, and/or other such data in such database associated with mail server 40.

Referring to FIG. 11, personal information 61 for respective users within personal information database 60 is registered when respective users, as accessors of mail server 40 and/or licensees or the like of specially designed mail software 21, carry out procedures for registration with an ISP or other such vendor which operates mail server 40. Such registration procedures may be carried out online or offline. Where such procedures are carried out online, each such user uses a web browser to connect such user's computer system 300 to a web server 200 operated by an ISP or other such vendor operating mail server 40, whereupon as a result of entering the user's mail address (which may in some cases be determined by such ISP or the like), name, street address, contact information, hobbies, age, occupation, sex, birth date, and other such items into a user registration form 210 provided by web server 200 and making application for registration, such entered items are registered by web server 200 in personal information database 60 as personal information 61 for each such user.

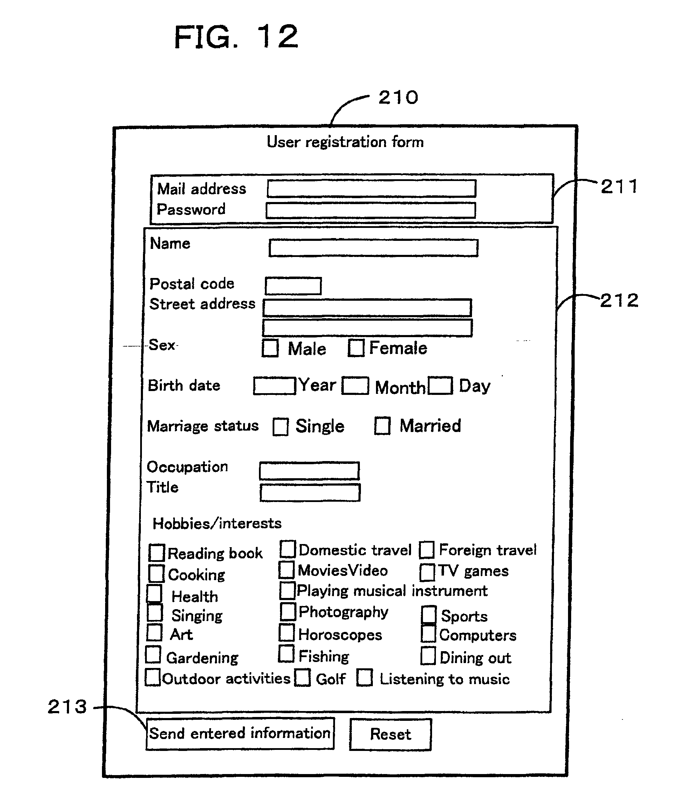

FIG. 12 shows an example of a user registration form 210. Referring to the example shown in FIG. 12, the user's electronic mail address and password are entered at field 211. At field 212, user information including such items as name, street address, sex, birth date, occupation, hobbies/interests, and the like is entered. The user need only enter those items which the user elects to enter. After completion of entry of elected items on user registration form 210, using a mouse or the like to click on a send button 213 causes the entered information to be sent to web server 200 and registered with personal information database 60 as personal information 61 for that user.

Referring again to FIG. 11, web server 200 furthermore possesses functionality for receiving advertisement placement requests and specifications for distribution schedules (day of month, day of week, time, or the like when distribution is to be carried out) and recipient user attributes (occupation, age, sex, region of residence, and the like) from advertisers and advertising agencies and for registering same in distribution schedule 70 and advertising information database 80, as well as functionality for storing in advertising information database 80 respective advertising information items which have themselves been uploaded thereto.

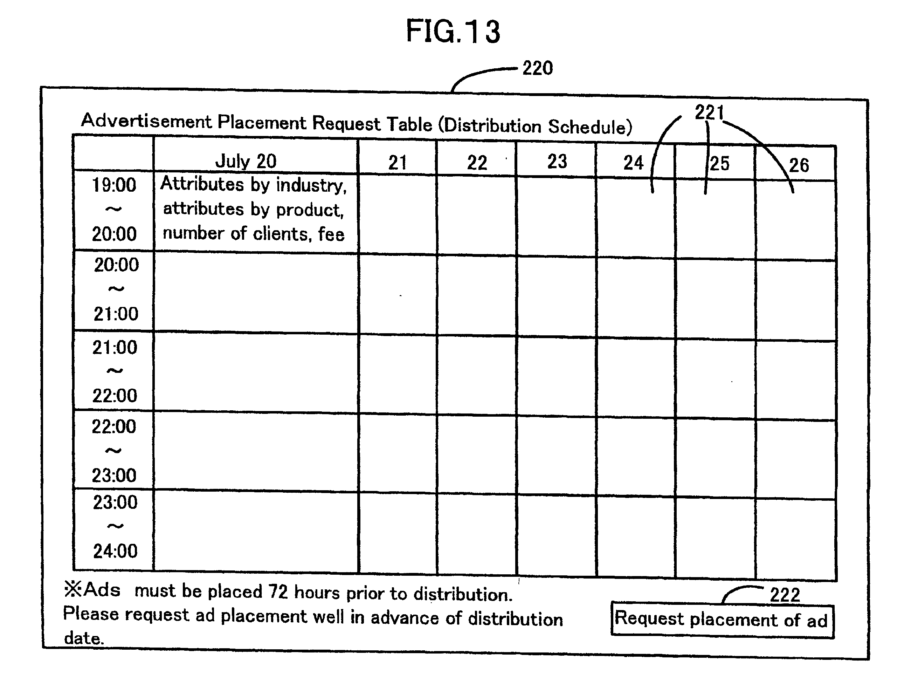

That is, when an advertiser or advertising agency connects its computer system 400 to web server 200 and requests placement of an advertisement, web server 200 provides computer system 400 of the advertiser or advertising agency with an advertisement placement request table 220 such as is shown by way of example in FIG. 13. Advertisement placement request table 220 shown by way of example in FIG. 13 is provided with order status display fields 221 organized by day of month and time of day intervals. Displayed within each such order status display field 221 (or in a detail display window, not shown, which might for example be opened by double-clicking on order status display field 221) are advertiser attributes listed for each applicable industry, product attributes listed for each product to be advertised, number of ads (or number of clients) requested, fee for ad placement, and so forth for ads for which a request has already been made for distribution on the corresponding day of month at the corresponding time of day. For example, if "Food manufacturing, condiments, 2 companies. Distribution, women's clothing, 1 company." were displayed at order status display field 221 for 21:00 - 22:00 on September 20, this might mean that 2 orders have been received from a food manufacturer for placement of ads for condiments, and 1 order has been received from a distributor for placement of ads for women's clothing, which ads are to be distributed during the 21:00 - 22:00 time slot on September 20. Ability to refer to such an advertisement placement request table 220 makes it easier for an advertiser or advertising agency to determine at what time or times of day and on what day or days of the month it would be most beneficial to have its ad or ads distributed. Moreover, upon selecting a desired day of month and time of day slot (e.g., by clicking on a corresponding order status display field) and clicking on an advertisement request button 222, an advertisement request table, not shown, may be opened wherein the advertiser's name, location, attributes listed for each applicable industry (or such items may alternatively have been preregistered during registration procedures optionally completed by the advertiser), product attributes listed for each product to be advertised, user attributes for recipient users, and so forth may be entered and returned to web server 200, permitting an advertisement placement request to be carried out. Furthermore, it is also possible when an advertisement placement request is made to upload the advertising information itself to web server 200 in online fashion from computer system 400 of the advertiser or advertising agency (or an electronic version of the advertising information may alternatively be sent by non-electronic mail, i.e., "snail mail," or the like). Web server 200 registers in distribution schedule 70 the day of month and time of day slot or slots for which distribution of an ad or ads is requested by way of the foregoing procedure, and uses the product attributes and attributes listed for each applicable industry from the advertiser making the request to update advertisement placement request table 220.

Furthermore, web server 200 possesses functionality for tabulating, separately for each advertising agency, the number of viewers of ads (total number of users who received ads) and reporting same to each such advertising agency.

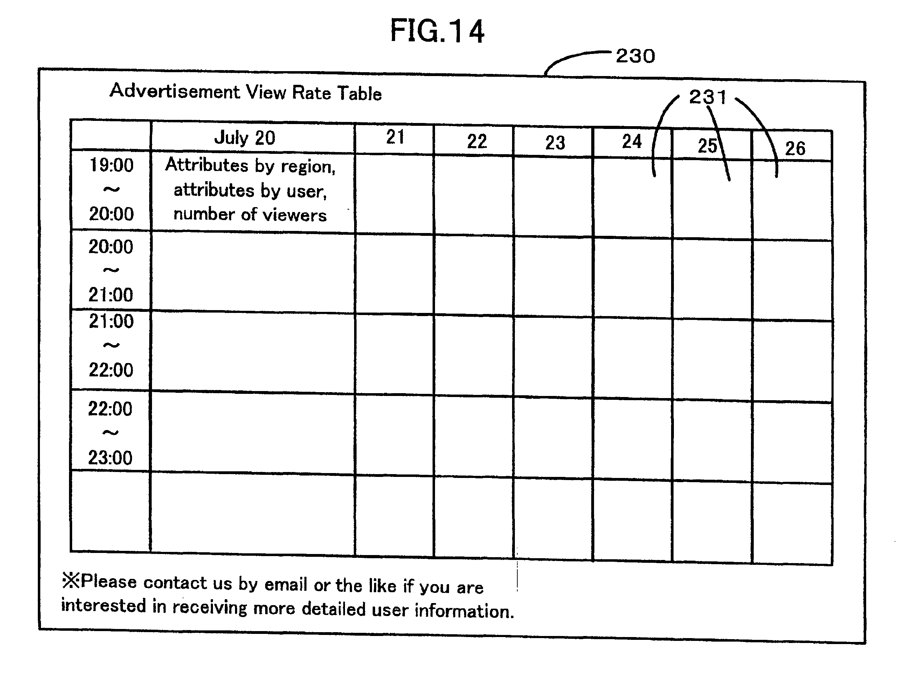

That is, when an advertiser or advertising agency connects its computer system 400 to web server 200 and requests a report of view rate or rates for an advertisement, web server 200 provides computer system 400 of the advertiser or advertising agency with an advertisement view rate table 230 such as is shown by way of example in FIG. 14. Advertisement view rate table 230 shown by way of example in FIG. 14 is created by web server 200 based on database 90 containing upload histories stored by mail server 40 at step 115 in FIG. 7. As described above, recorded at upload history database 90 are, organized by advertising firm as automatically identified by means of version IDs of specially designed mail software 21, day of month and time of day slots at which ads were distributed, recipient users, advertising information which was distributed, version IDs of specially designed mail software 21 used by users (i.e., identities of advertising firms which distributed such specially designed mail software), and so forth. Based on such data, web server 200 tabulates, separately for each day of month and time of day slot, for each version ID (i.e., advertising firm), and for each advertisement, the number of viewers of ads (total number of users receiving distribution), and moreover tabulates regions of residence, sex, and/or other such attribute or attributes of users receiving distribution, displaying same in an advertisement view rate table 230 such as is shown by way of example in FIG. 14. Displayed at this advertisement view rate table 230 are viewer quantity display fields 231 for respective day of month and time of day slots, each such viewer quantity display field 231 displaying, where an advertiser or advertising firm accessing such advertisement view rate table 230 has requested placement of an ad or ads for the day of month and time of day slot corresponding to such viewer quantity display field 231, viewer attribute or attributes listed by region of residence and/or other such attribute or attributes which is or are different for different users, numbers of viewers thereof, and/or the like for viewers of such ad or ads. For example, if "Tokyo, male, 1234. Tokyo, female, 5678." were displayed at viewer quantity display field 231 for 21:00- 22:00 on September 20, this might mean that an ad or ads requested for distribution during the 21:00 - 22:00 time slot on September 20 (e.g., taking the case where males and females residing in Tokyo was specified as recipient user attributes) was or were distributed to 1234 males residing in Tokyo and to 5678 females residing in Tokyo. By referring to such an advertisement view rate table 230, an advertiser or advertising agency can accurately grasp advertising effectiveness (view rates) of its ad or ads. Moreover, a service through which a more detailed report is sent to an advertiser or advertising firm via electronic mail or other such method may also be carried out.

Furthermore, web server 200 also possesses functionality for employing results of tabulation, as described above, of viewer quantity or other such measure of system usage, tabulated separately for each such advertising agency and/or advertiser, to calculate charges from such tabulated viewer quantity or quantities or other such measure of system usage and to perform billing of each such advertising agency and/or advertiser for such charges.

Referring again to FIG. 11, recipient award server 50 carries out management of award points respectively accruing to a plurality of users making use of recipient mail server 40. Recipient award server 50 is constituted so as to carry out determination of whether to award each user a stake in a drawing for a prize based on the point or points for that user. Procedures for informing a user that such user has been awarded a drawing stake and procedures for participation in such drawing by such user may for example be carried out online, e.g., by way of communication between web server 210 and user system 300 used by such user, or may for example be carried out as a result of electronic mail transactions between user system 300 and mail server 40. Each time that advertisement-information-carrying electronic mail is sent to a user, mail server 40 updates the award points for that recipient user managed at recipient user award server 50 by adding a prescribed amount thereto. Accordingly, the number of award points for a user increases as the number of advertisement-information-carrying electronic mail messages received by that user 20 increases. A user is eligible to receive the aforementioned stake in a drawing for a prize if the number of his or her award points meets or exceeds some prescribed threshold value. A user receiving such a drawing stake may participate in such drawing using a method such as was described above. A user winning such a drawing receives a prescribed prize. Since not a prize but only a stake in a drawing is conferred at low cost based on award points, by at such server system investigating such history of electronic mail sent and/or received by such user prior to conferring such drawing stake it is possible to prescreen for users who may have sent themselves large volumes of electronic mail or engaged in other such fraudulent conduct. Such server system may prevent conferring of drawing stake or stakes to user or users who may have engaged in such fraudulent conduct by reducing award points accrued thereto, or by making such user or users ineligible for receipt of such drawing stake or stakes, or the like.

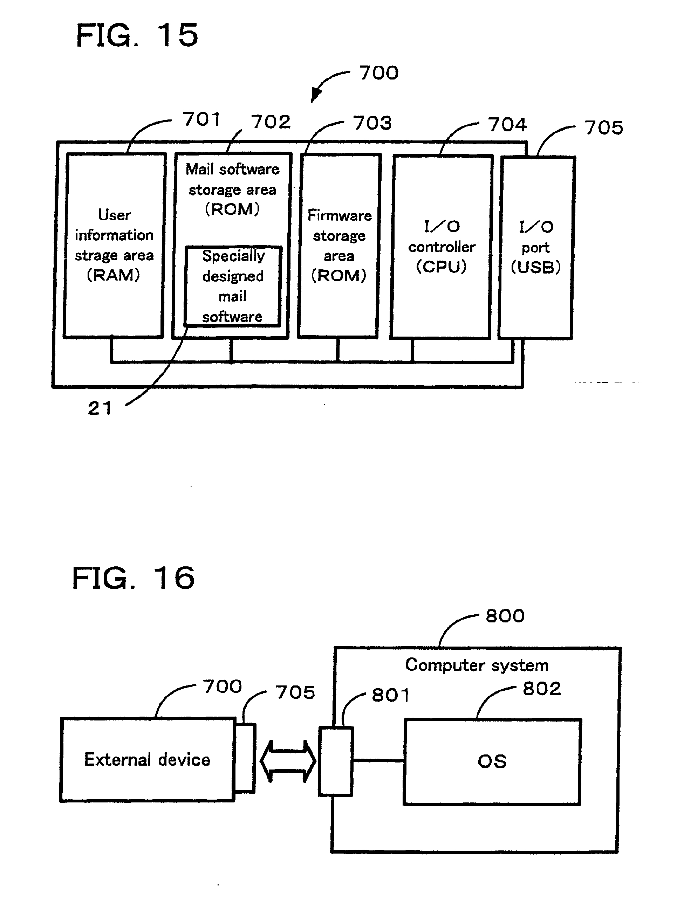

FIGS. 15 and 16 show an exemplary constitution permitting use of an external device capable of being mounted in and removed from a user's computer system to deploy the aforementioned specially designed mail software 21 at such user's computer system.

Referring to FIG. 15, external device 700 is for example a USB device having a USB or other such I/O port 705 (such device may of course employ an I/O interface other USB). With additional reference now to FIG. 16, external device 700 is capable of being mounted in and removed from an arbitrary computer system 800 having a USB or other such corresponding I/O port 801. External device 700 is preferably small, lightweight, and highly portable, and preferably draws any electrical power which it requires for operation from computer system 800.

As shown in FIG. 15, external device 700 contains a user information storage area 701 employing for example nonvolatile RAM, a mail software storage area 702 employing for example ROM, a firmware storage area 703 employing for example ROM, and an I/O controller 704 employing for example a CPU for execution of firmware.

Specially designed mail software 21 is preinstalled at mail software storage area 702 with external device 700. Furthermore, stored at user information storage area 701 is specific user information related to use of such computer system and specific to the user of such external device 700. Such user information may for example be as follows.
(1) Information identifying a standard computer system which that user primarily uses (e.g., MAC address).
(2) Information specific to that user and required for user authorization for connecting to a network (e.g., a user name and password for logging onto an Internet connection server, a user name and password for logging onto an electronic mail server, or the like).
(4) Information specific to that user and required for user authorization when logging onto such external device 700 (e.g., user name and password).

When such user uses an arbitrary computer system 800, the user can mount an external device 700 which he or she possesses in that computer system 800. Upon mounting external device 700 therein, an operating system 802 at computer system 800 recognizes such external device 700. Upon entry into computer system 800 of a user name and password for logging onto such external device 700 by the user, user authorization is carried out at external device 700, and if such user authorization is successful then the foregoing user information and specially designed mail software 21 within external device 700 are made available for use at computer system 800. Upon issuance of a request from the user to operating system 802 to launch specially designed mail software 21, operating system 802 executes specially designed mail software 21 which is stored in ROM within external device 700. When connecting to a network such as the Internet or when sending electronic mail or at a similar such time, it is possible to log onto a mail server or the like by making use of user information for connecting to a network or networks which is stored within external device 700. Such user information for connecting to a network or networks which is stored within external device 700 may be used not only during use of specially designed mail software 21, but also during use of other application program or programs which accesses or access a network or networks; e.g., web browsers, regular electronic mail software, and the like.

Adoption of such method makes it possible to receive electronic mail with the value-added feature that it serves as advertising medium, even where specially designed mail software 21 has not been installed on computer system 800 prior thereto. Accordingly, the user is able to receive electronic mail with the value-added feature that it serves as advertising medium, not just when using a particular computer system or systems that he or she primarily uses, but also when using an arbitrary computer system located for example at an Internet café or other such site.

Furthermore, specially designed mail software 21 uses information (e.g., MAC address) for identifying the standard computer system primarily used by that user which is stored within that external device 700 to determine whether the computer system 800 in which that external device 700 is mounted is a standard computer primarily used by the user or a computer which is temporarily being used by the user. In the event that this computer system 800 is such a computer being used in temporary fashion, specially designed mail software 21 may automatically completely erase all electronic mail sent or received by the user, user information for connecting to a network or networks, and/or any other such personal data belonging to the user which remains within storage apparatus or apparatuses of that computer system 800 following termination of electronic mail operations. Such erasure permits prevention of various problems that can arise among users when another user or users uses or use that same computer system 800.

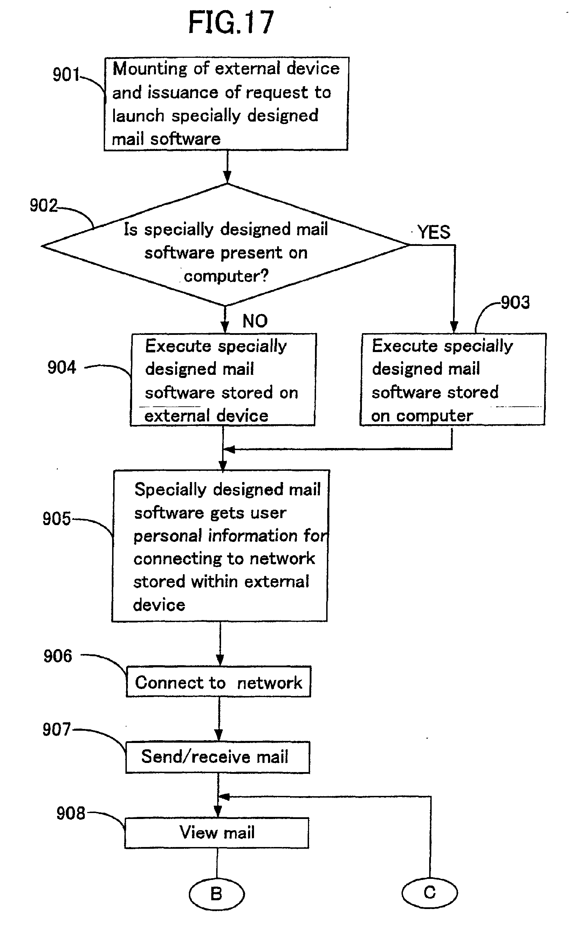

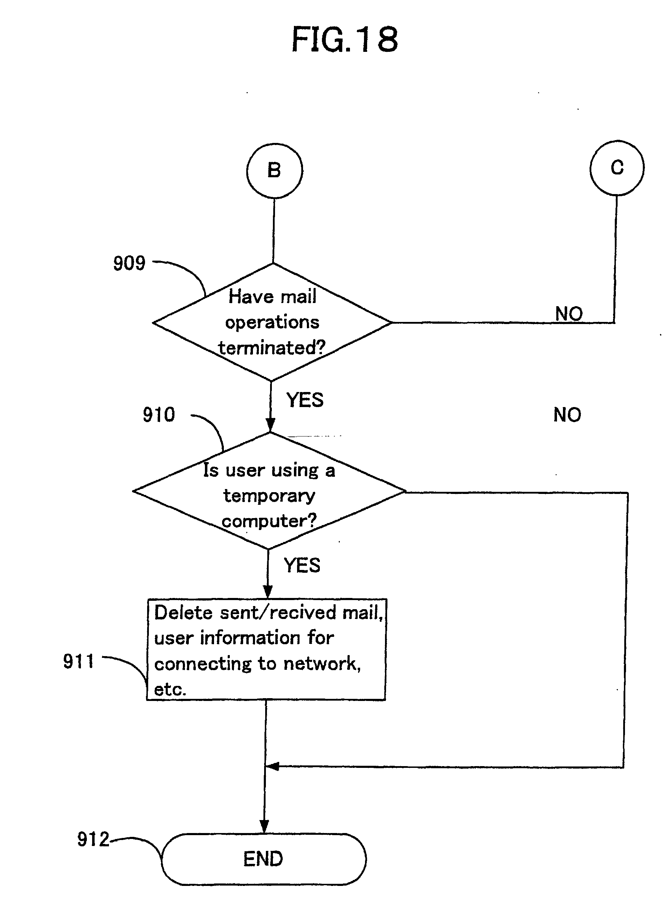

FIGS. 17 and 18 show a sequence of operations occurring at computer system 800 when specially designed mail software 21 within external device 700 is executed.

Referring to FIG. 17, at step 901, upon mounting of external device 700 in computer system 800, successful login to external device 700, and issuance of a request from the user to launch specially designed mail software 21, checking is performed at step 902 to determine whether specially designed mail software 21 is installed within computer system 800. If as a result of such checking it is determined that specially designed mail software 21 is present within computer system 800, then specially designed mail software 21 within computer system 800 is executed at step 903. On the other hand, if it is determined that specially designed mail software 21 is not present within computer system 800, then specially designed mail software 21 within external device 700 is executed at step 904.

Specially designed mail software 21 thereafter at step 905 recognizes user information for connecting to a network or networks which is stored within external device 700, at step 906 uses such user information to connect to a network and log onto a mail server, and at step 907 carries out sending and/or receiving of electronic mail. Furthermore, at step 908, upon issuance of a request to view received mail, specially designed mail software 21 displays such received mail. At the foregoing steps 907 and/or 908, if advertising information is affixed to received mail, then specially designed mail software 21 furthermore displays such advertising information in such manner as has already been described above.

Referring now to FIG. 18, thereafter, at step 909, upon issuance by the user of a request to terminate mail operations (or upon termination thereof by specially designed mail software 21), specially designed mail software 21 at step 910 compares identifying information (e.g., MAC address) for the standard computer within external device 700 and identifying information (e.g., MAC address) of computer system 800 to determine whether that computer system 800 is the standard computer or a computer being used temporarily. If it is as a result determined that computer system 800 is a computer being used temporarily, then specially designed mail software 21 at step 911 deletes any mail sent or received by that user and any user information belonging to that user for connecting to a network or networks which is or are present within storage apparatus or apparatuses of that computer system 800. Thereafter, at step 912, specially designed mail software 21 terminates.

Advertising methods employed by the systems described in the foregoing embodiments, since they represent marketing techniques for uncovering the individual needs of consumers who are users that utilize computer networks, allow such users to obtain only that advertising information which they require, and so can be expected to have a ripple effect with respect to increase of consumption. Such methods furthermore foster recognition by advertisers of electronic mail as a new advertising medium. The advertising medium represented by electronic mail, utilized through the methods of those embodiments, is competitive with radio and television broadcasting, advertising towers, neon signs, magazines, newspapers and other such existing media, and allows provision of advertisements having powerful information-communicating effect on users. In addition, there are also the advantages of rapidity of communication and undelayed effect. Furthermore, because it is possible to freely define the target or targets of advertisement, the time slot or slots for distribution thereof, and so forth, it is possible to keep advertising cost to as low a figure is sufficient or necessary. Moreover, depending on how the mail server is operated, mechanisms by which advertisements are distributed at selected time slots, similar to what is done with ads on radio, television, and the like, can be more easily created. Furthermore, by referring to a user's personal information database, it is possible to present the user only with ads selected for content consistent with the user's lifestyle, anniversaries, interests, and so forth. Moreover, it is possible to present ads to users in a way that makes effective use of time spent waiting for completion of mail upload/download or other such time that would otherwise be wasted. Furthermore, where necessary, it is also possible from an advertisement affixed to electronic mail to induce a user to access a website or the like of an advertiser developing network business.

Moreover, besides simple TXT format, mail may also employ HTML format or any of a wide variety of other such mail formats; and if HTML format is for example employed, it is possible to easily produce advertisements utilizing video, audio, and other such multimedia content.

The foregoing embodiment of the present invention described above having been presented by way of example for purposes of describing the present invention, the present invention may be carried out in a wide variety of other modes without departing from the essence thereof

## Claims

1. A system for using electronic mail as an advertising medium, the system being provided with
a mail server that possesses one or more advertising information items and advertisement distribution condition or conditions established for respective advertising information item or items, and that when electronic mail is to be sent to a user computer system used by a user recipient selects an advertising information item or items satisfying the advertisement distribution condition or conditions and affixes such selected advertising information item or items to the electronic mail which is sent to the user computer system; and
mail software that is capable of being executed by the user computer system, that receives the electronic mail from the mail server, and that displays the advertising information item or items affixed to the received electronic mail during or after receipt of the electronic mail.

2. A system according to claim 1 wherein
the electronic mail has a mail header and a message body which is sent after the mail header; and
the mail server affixes the advertising information item or items to the mail header of the electronic mail which is sent;
so as to permit the mail software to receive the advertising information item or items before the message body and to display the advertising information item or items during receipt of the message body.

3. A system according to claim 1 furthermore provided with a stream server for sending advertisement streaming data to the recipient user computer system;
the advertising information item or items affixed to the electronic mail being capable of comprising an address or addresses for the streaming data; and
in the event that the received advertising information item or items comprises or comprise such address or addresses for the streaming data the mail software using the address or addresses to receive the streaming data from the stream server and displaying the received streaming data.

4. A system according to claim 1 furthermore provided with an external device capable of being mounted in and removed from the user computer system, the external device containing the mail software;
so as to permit execution of the mail software by the user computer system as a result of mounting of the external device in the user computer system regardless of whether the mail software has or has not been installed on the user computer system prior thereto.

5. A method for using electronic mail as an advertising medium, the method employing
a step taking place at a server system such that one or more advertising information items and advertisement distribution condition or conditions established for respective advertising information item or items are stored;
a step taking place at the server system such that when electronic mail is to be sent to a user computer system used by a user recipient an advertising information item or items satisfying the advertisement distribution condition or conditions is or are selected from among the stored advertising information item or items and such selected advertising information item or items is or are affixed to the electronic mail which is sent to the user computer system; and
a step taking place at the user computer system such that the advertising information item or items affixed to the electronic mail is or are displayed during or after receipt of the electronic mail.

6. A method according to claim 5 furthermore employing
a step taking place at the server system such that personal information for respective user or users is stored;
a step taking place at the server system such that user attribute or attributes for candidate recipient user or users serving as the advertisement distribution condition or conditions is or are stored; and
a step taking place at the server system such that, when the electronic mail is to be sent to the user computer system, selection of advertising information item or items satisfying the advertisement distribution condition or conditions is carried out through comparison of the stored personal information for recipient user or users and the stored user attribute or attributes serving as advertisement distribution condition or conditions for respective advertising information item or items.

7. A method according to claim 5 furthermore employing
a step taking place at the server system such that distribution time period or periods serving as the advertisement distribution condition or conditions is or are stored; and
a step taking place at the server system-such that when the electronic mail is to be sent to the user computer system selection of advertising information item or items satisfying the advertisement distribution condition or conditions is carried out by determining whether the current time period corresponds to the stored distribution time period or periods serving as the advertisement distribution condition or conditions for respective advertising information item or items.

8. A method according to claim 5 wherein the electronic mail has a mail header and a message body which is sent after the mail header;
the advertising information item affixing step being such that the advertising information item or items is or are affixed to the mail header of the electronic mail so as to permit employment of a step allowing the advertising information item or items to be received at the recipient user computer before the message body; and
the advertising information item display step being such that the previously received advertising information item or items is or are displayed during receipt of the message body.

9. A method according to claim 5 furthermore employing a step taking place at the server system such that advertisement streaming data is saved;
the advertising information item affixing step employing a step wherein an address or addresses for the streaming data is or are included in the advertising information item or items affixed to the electronic mail; and
in the event that the received advertising information item or items comprises or comprise such address or addresses for the streaming data the advertising information item display step employing a step wherein the address or addresses is or are used to receive the streaming data from the server system and a step wherein the received streaming data is displayed.

10. A server system for using electronic mail as an advertising medium, the system being provided with
an advertisement placement request server that presents an advertisement placement condition or conditions including advertising fee or fees to a computer system of an advertisement provider and that accepts from the advertisement provider computer system an advertisement placement request or requests as well as advertisement distribution condition or conditions for such advertisement or advertisements which is or are the subject or subjects of the request or requests; and
a mail server that possesses one or more advertising information items as well as the advertisement distribution condition or conditions accepted by the advertisement placement request server for respective advertising information item or items and that when electronic mail is to be sent to a user computer system used by a user recipient selects an advertising information item or items satisfying the advertisement distribution condition or conditions and affixes such selected advertising information item or items to the electronic mail which is sent to the user computer system.

11. A method of operating a server system for using electronic mail as an advertising medium, the method employing
a step wherein an advertisement placement condition or conditions including advertising fee or fees is or are presented to a computer system of an advertisement provider;
a step wherein an advertisement placement request or requests as well as advertisement distribution condition or conditions for such advertisement or advertisements which is or are the subject or subjects of the request or requests are accepted from the advertisement provider computer system;
a step wherein one or more advertising information items as well as the advertisement distribution condition or conditions for respective advertising information item or items accepted from the advertisement provider providing that or those advertising information item or items are saved; and
a step wherein, when electronic mail is to be sent to a user computer system used by a user recipient, an advertising information item or items satisfying the advertisement distribution condition or conditions is or are selected-from among the stored advertising information item or items and such selected advertising information item or items is or are affixed to the electronic mail which is sent to the user computer system.

12. A server system for using electronic mail as an advertising medium, the system being provided with
a mail server that possesses one or more advertising information items as well as advertisement distribution condition or conditions for respective advertising information item or items, and that when electronic mail is to be sent to a user computer system used by a user recipient selects an advertising information item or items satisfying the advertisement distribution condition or conditions and affixes such selected advertising information item or items to the electronic mail which is sent to the user computer system; and
a report server that possesses a history concerning affixing of the advertising information item or items to the electronic mail and sending thereof to the user computer system and that uses the history to report advertising results for the advertising information item or items to, or to carry out processing with respect to advertising charges in connection with the advertising information item or items for, the advertisement provider providing the advertising information item or items.

13. A system according to claim 12 furthermore employing
means for, when the electronic mail is sent to the user computer system, identifying a mail software provider or providers which provided the user recipient with mail software used at the user computer system; and
means for reporting advertising results for the advertising information item or items to such identified mail software provider or providers.

14. A method of operating a server system for using electronic mail as an advertising medium, the method employing
a step wherein one or more advertising information items as well as advertisement distribution condition or conditions for respective advertising information item or items are saved;
a step wherein, when electronic mail is to be sent to a user computer system used by a user recipient, an advertising information item or items satisfying the advertisement distribution condition or conditions is or are selected and such selected advertising information item or items is or are affixed to the electronic mail which is sent to the user computer system;
a step wherein a history concerning axing of the advertising information item or items to the electronic mail and sending thereof to the user computer system is saved; and
a step wherein the history is used to report advertising results for the advertising information item or items to, or to carry out charge assessment processing with respect to advertising charges in connection with the advertising information item or items for, the advertisement provider providing the advertising information item or items.

15. A method according to claim 14 furthermore employing
a step wherein, when the electronic mail is sent to the user computer system, a mail software provider or providers which provided the user recipient with mail software used at the user computer system is or are identified; and
a step wherein advertising results for the advertising information item or items are reported to, or charge assessment processing is carried out with respect to charges in connection with the advertising information item or items for, such identified mail software provider or providers.

16. A system for using electronic mail as an advertising medium, the system being provided with
a mail server that possesses one or more advertising information items and that, when electronic mail is to be sent to a user computer system used by a user recipient, affixes the advertising information item or items to the electronic mail which is sent to the user computer system, the electronic mail having a mail header and a message body which is sent after the mail header and the mail server being such as to allow the advertising information item or items to be affixed to the mail header of the electronic mail; and
mail software that is capable of being executed by the user computer system, that receives the electronic mail from the mail server, and that displays the advertising information item or items affixed to the mail header of the received electronic mail during receipt of the message body of the electronic mail.

17. A method for using electronic mail as an advertising medium, the method employing
a step taking place at a server system such that one or more advertising information items is or are saved;
a step taking place at the server system such that, when electronic mail is to be sent to a user computer system used by a user recipient, the saved advertising information item or items is or are affixed to the electronic mail which is sent to the user computer system, the electronic mail having a mail header and a message body which is sent after the mail header, this step furthermore being such as to allow the advertising information item or items to be affixed to the mail header of the electronic mail; and
a step taking place at the user computer system such that the electronic mail is received and such that the advertising information item or items affixed to the mail header of the received electronic mail is or are displayed during receipt of the message body of the electronic mail.

18. A system for using electronic mail as an advertising medium, the system being provided with
a mail server that possesses one or more advertising information items and that, when electronic mail is to be sent to a user computer system used by a user recipient, affixes the advertising information item or items to the electronic mail which is sent to the user computer system;
a stream server for sending advertisement streaming data to the user computer system; and
mail software that is capable of being executed by the user computer system, that receives the electronic mail from the mail server, and that displays the advertising information item or items affixed to the received electronic mail;
the advertising information item or items affixed to the electronic mail being capable of comprising an address or addresses for the streaming data; and
in the event that the received advertising information item or items comprises or comprise such address or addresses for the streaming data the mail software using the address or addresses to receive the streaming data from the stream server and displaying the received streaming data.

19. A method for using electronic mail as an advertising medium, the method employing
a step taking place at a mail server such that one or more advertising information items is or are stored;
a step taking place at a stream server such that advertisement streaming data is saved;
a step taking place at the mail server such that when electronic mail is to be sent to a user computer system used by a user recipient the advertising information item or items is or are affixed to the electronic mail which is sent to the user computer system, this step furthermore permitting an address or addresses for the streaming data to be included in the advertising information item or items;
a step taking place at the user computer system such that the electronic mail is received from the mail server; and
a step taking place at the user computer system such that in the event that the advertising information item or items affixed to the received electronic mail comprises or comprise such address or addresses for the streaming data the address or addresses is or are used to receive the streaming data from the stream server and the received streaming data is displayed.

20. A system for using electronic mail as an advertising medium, the system being provided with
a mail server that possesses one or more advertising information items and that, when electronic mail is to be sent to a user computer system used by a user recipient, affixes the advertising information item or items to the electronic mail which is sent to the user computer system;
an external device in the possession of the user recipient and capable of being mounted in and removed from the user computer system; and
mail software that is stored in the external device, that is made capable of being executed by the user computer system when the external device is mounted in the user computer system, that receives the electronic mail from the mail server, and that displays the advertising information item or items affixed to the received electronic mail.

21. A method for using electronic mail as an advertising medium, the method employing
a step taking place at a mail server such that one or more advertising information items is or are stored;
a step taking place at the mail server such that when electronic mail is to be sent to a user computer system used by a user recipient the advertising information item or items is or are affixed to the electronic mail which is sent to the recipient user computer system;
a step such that an external device storing mail software capable of being executed by the user computer system is mounted in the user computer system;
a step taking place at the user computer system such that the mail software within the external device is executed as a result of the external device's having been mounted therein; and
a step taking place at the user computer system such that the mail software is used to receive the electronic mail from the mail server and the advertising information item or items affixed to the received electronic mail is or are displayed.

22. A mail server provided with
a storage apparatus storing one or more advertising information items;
an affixing apparatus for affixing the stored advertising information item or items to electronic mail; and
a sending apparatus for sending to a user computer system used by a user recipient the electronic mail to which the advertising information item or items has or have been affixed;
the electronic mail having a mail header and a message body which is sent after the mail header; and
the affixing apparatus affixing the advertising information item or items to the mail header of the electronic mail.

23. A computer program causing a computer to execute
a step such that electronic mail is received, the electronic mail having a mail header and a message body which follows the mail header, this step furthermore being such as to allow the mail header to comprise an advertising information item or items; and
a step such that in the event that the mail header of the received electronic mail comprises the advertising information item or items the advertising information item or items is or are displayed during receipt of the message body.

24. A server system for using electronic mail as an advertising medium, the system being provided with
a mail server that possesses one or more advertising information items and that, when electronic mail is to be sent to a user computer system used by a user recipient, affixes the advertising information item or items to the electronic mail which is sent to the user computer system; and
a recipient user award server that stores award point or points accrued to the user recipient, that updates the award point or points for the user recipient when the advertising information item or items is or are affixed to the electronic mail which is sent to the user computer system, and that awards the user recipient a stake in a drawing for a prize based on the award point or points.

25. A server system according to claim 24 furthermore provided with
means for storing a history concerning reception of electronic mail by the user recipient; and
means for-determining, as a result of investigation of the history, whether there has been fraudulent reception of electronic mail by the user recipient and for controlling the accruing of award point or points for the user recipient or whether the user is to be awarded the drawing stake in correspondence to the results of that determination.

26. A method of operating a server system for using electronic mail as an advertising medium, the method employing
a step wherein one or more advertising information items is or are saved;
a step wherein when electronic mail is to be sent to a user computer system used by a user recipient the advertising information item or items is or are affixed to the electronic mail which is sent to the user computer system;
a step wherein award point or points accrued to the user recipient is or are stored;
a step wherein the award point or points for the user recipient is or are updated when the advertising information item or items is or are affixed to the electronic mail which is sent to the user computer system; and
a step wherein the user recipient is awarded a stake in a drawing for a prize based on the award point or points.

27. A method according to claim 26 furthermore employing
a step wherein a history concerning reception of electronic mail by the user recipient is stored;
a step wherein whether there has been fraudulent reception of electronic mail by the user recipient is determined as a result of investigation of the history; and
a step wherein the accruing of award point or points for the user recipient or whether the user is to be awarded the drawing stake is controlled in correspondence to the results of that determination.
